# FASCICULE DE BREVET EUROPEEN

(11) **EP 0 740 158 B1**
(45) Date de publication et mention de la délivrance du brevet: **03.02.1999**
(21) Numéro de dépôt: 96400503.7
(22) Date de dépôt: 12.03.1996
(51) Int. Cl.: G01P 3/44

(54) **Roulement muni d'un dispositif intégré de détection de la vitesse de rotation**
Wälzlager mit einer integrierten Messvorrichtung für die Drehgeschwindigkeit
Roll bearing with integrated rotating speed detection device

(30) Priorité: 28.03.1995 FR 9503615
(43) Date de publication de la demande: 30.10.1996
(73) Titulaire: SKF FRANCE, F-92140 Clamart (FR)
(72) Inventeur: Rigaux, Christian, 37260 Artannes sur Indre (FR)
(74) Mandataire: Casalonga, Axel

(56) Documents cités:
- EP-A- 0 397 309
- US-A- 4 865 468
- US-A- 4 938 612
- US-A- 5 121 998
- US-A- 5 287 738

## Description

La présente invention concerne les roulements à deux rangées d'éléments roulants munis d'un dispositif intégré de détection de la vitesse de rotation comprenant un codeur solidaire des organes tournants du roulement et un capteur solidaire des organes non tournants du roulement. Un tel dispositif peut par exemple être monté sur un palier à roulement de roue de véhicule couplé à un système de freinage anti-blocage de type ABS.

On connaît par la demande de brevet britannique GB 2 232 252, un roulement à deux rangées de billes comprenant une bague extérieure non tournante et deux bagues intérieures tournantes. L'élément codeur est fixé sur l'une des bagues intérieures tournantes, sur un diamètre extérieur de celle-ci, de façon à se trouver à l'intérieur du roulement entre les deux chemins de roulement. Le capteur est fixé sur la bague extérieure non tournante du roulement dans un trou traversant radialement la paroi de ladite bague. La tête du capteur débouche à l'intérieur du roulement en regard de l'élément codeur.

Un inconvénient de ce type de codeur réside dans le fait qu'il n'est pas adapté à des applications exigeant un encombrement axial limité. En effet, la partie active de l'élément codeur est située radialement à proximité immédiate des bagues intérieures. Le capteur s'étend entre les cages des deux rangées de billes ce qui implique que les cages soient espacées axialement d'une distance supérieure au diamètre de la tête du capteur. Cette disposition n'est pas satisfaisante du point de vue de l'encombrement axial du roulement.

L'invention a donc pour objet de réaliser un roulement muni d'un dispositif de détection de la vitesse de rotation du type décrit précédemment, dans lequel les cages sont disposées à faible distance axiale l'une de l'autre.

Un autre objet de l'invention est de réaliser un roulement muni d'un dispositif de détection de la vitesse de rotation particulièrement compact.

Un autre objet de l'invention est de réaliser un roulement dont le codeur et le capteur sont très bien protégés des éléments extérieurs.

Un autre objet de l'invention est de réaliser un roulement muni d'un dispositif de détection de la vitesse de rotation dont le codeur est simple à réaliser.

Selon l'invention, le roulement à deux rangées d'éléments roulants maintenus par des cages comprend une bague non tournante, deux bagues tournantes et un dispositif intégré de détection de la vitesse de rotation qui est du type comprenant un capteur fixé sur la bague non tournante devant lequel défile en rotation et avec un faible entrefer un élément codeur solidaire des bagues tournantes et capable de produire dans le capteur un signal périodique de fréquence proportionnelle à la vitesse de rotation des bagues tournantes. L'élément codeur comprend une partie radiale disposée entre les cages et supportant la partie active dudit élément. La partie active de l'élément codeur est disposée dans un espace annulaire entre la surface annulaire de la bague non tournante séparant les chemins de roulement et la surface extérieure des cages située entre les deux rangées d'éléments roulants, la dimension axiale de la partie active de l'élément codeur étant supérieure à l'espace axial résiduel situé entre les deux cages.

Dans un mode de réalisation de l'invention, le capteur affleure sensiblement la surface annulaire de la bague non tournante séparant les chemins de roulement.

Dans un mode de réalisation de l'invention, une portion de la partie radiale de l'élément codeur est pincée entre les deux bagues intérieures tournantes. Avantageusement l'alésage de la partie radiale du codeur est centré sur une bague intérieure formant moyeu.

Dans un mode de réalisation de l'invention, la partie radiale du codeur se prolonge par une partie cylindrique emmanchée sur une bague du roulement.

Dans un mode de réalisation de l'invention, la partie active de l'élément codeur est supportée par la périphérie extérieure de la partie radiale dudit élément codeur.

Dans un mode de réalisation de l'invention l'élément codeur comprend une partie cylindrique disposée à proximité du capteur et supportant la partie active dudit élément codeur.

Dans un mode de réalisation de l'invention, la partie active de l'élément codeur est constituée par une pluralité d'encoches ou de fenêtres.

Dans un autre mode de réalisation de l'invention, la partie active de l'élément codeur comprend un anneau en élastomère chargé de particules magnétiques.

On obtient, ainsi, grâce à l'invention, un roulement de faible dimension axiale car les cages sont proches axialement l'une de l'autre et dont le codeur est de taille suffisante pour produire un champ magnétique satisfaisant.

L'invention sera mieux comprise à l'étude de quelques modes de réalisation décrits à titre d'exemples nullement limitatifs et illustrés par les dessins annexés, sur lesquels :
la figure 1 est une vue en coupe axiale d'un moyeu de roue de véhicule équipé d'un roulement avec un dispositif de détection de vitesse de rotation selon l'invention;
la figure 2 est une vue de détail du roulement de la figure 1;
la figure 3 est une vue extérieure du codeur monté dans le roulement de la figure 2;
la figure 4 est une variante du codeur de la figure précédente;
la figure 5 est une vue en coupe axiale d'une autre variante du codeur;
la figure 6 est une vue de détail en coupe axiale du roulement selon un autre mode de réalisation de l'invention;
la figure 7 est une vue de détail en coupe axiale d'un roulement selon un autre de réalisation de l'invention; et
la figure 8 est une vue de détail en coupe axiale du roulement selon un autre mode de réalisation de l'invention.

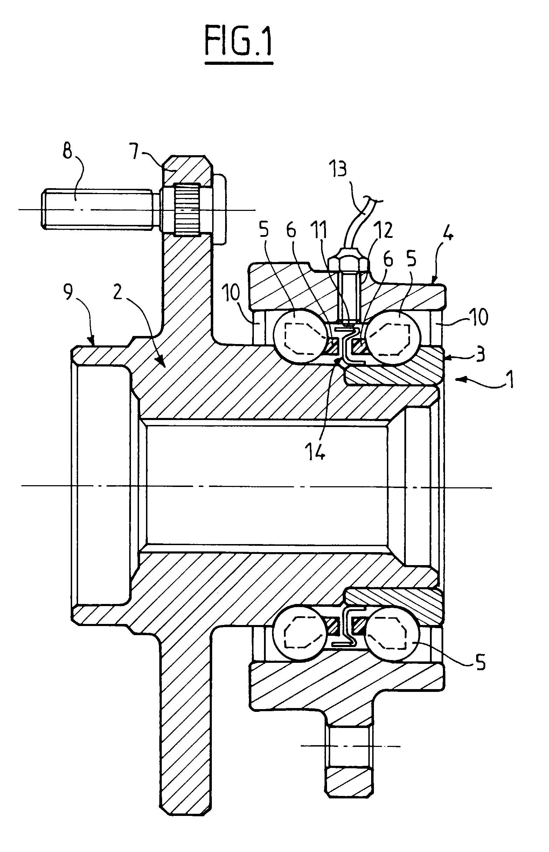

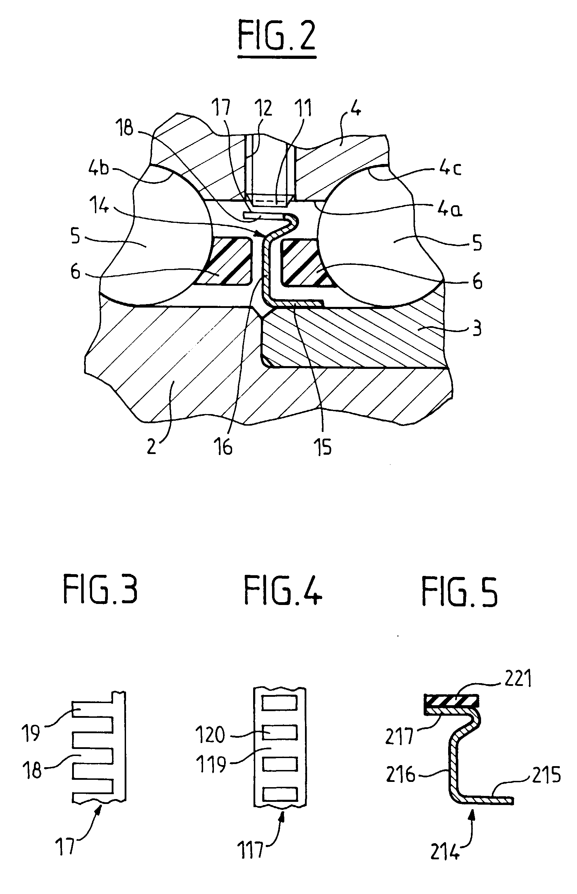

Comme illustré sur les figures 1 et 2, le roulement 1 comprend deux bagues intérieures tournantes 2, 3, une bague extérieure non tournante 4, des éléments roulants tels que des billes 5 maintenues par des cages 6. La bague intérieure tournante 2 forme le moyeu de la roue et comprend un collet annulaire 7 sur lequel sont montées des vis de fixation 8 de la roue, et des portées de centrage et de fixation 9 de la roue. Le roulement 1 comprend, également, des moyens d'étanchéité 10, par exemple, des joints d'étanchéité destinés à protéger les éléments roulants 5 de l'intrusion d'éléments extérieurs à l'intérieur du roulement et, le cas échéant, à conserver la graisse contenue dans le roulement 1.

Le capteur 11 est fixé sur la bague extérieure non tournante 4 du roulement 1, dans un trou 12 traversant radialement la paroi de ladite bague 4, la tête du capteur 11 venant affleurer la surface annulaire 4a de la bague non tournante 4, définie entre les chemins de roulement 4b et 4c des éléments roulants 5. Le capteur 11 est relié par un câble 13 à un dispositif de traitement de l'information non représenté. Le codeur 14 est réalisé, par exemple, en tôle magnétique et comprend une partie cylindrique 15 emmanchée sur la surface annulaire de la bague tournante 3 située entre les chemins de roulement, une partie radiale 16 s'étendant de la partie cylindrique 15 vers le capteur 11 et disposée entre les cages 6 de maintien des billes 5. Le codeur 14 et, en particulier, sa partie radiale 16, étant réalisés en tôle mince, les cages 6 peuvent être très proches axialement l'une de l'autre. Le codeur 14 comprend une partie cylindrique 17 supportée par la partie radiale 16 et disposée à proximité de la surface annulaire 4a de la bague 4 définie entre les chemins de roulement 4b et 4c, en regard et à faible distance du capteur 11. La partie cylindrique 17 constitue la partie active du codeur 14, est pourvue d'encoches 18 et est disposée dans l'espace annulaire défini entre la surface annulaire 4a de la bague 4 et la surface extérieure des cages 6 située entre les deux rangées d'éléments roulants. La dimension axiale de la partie cylindrique 17 est supérieure à la distance axiale séparant les cages 6 l'une de l'autre.

Tel qu'illustré sur la figure 3, la partie cylindrique 17 du codeur 14 comprend une pluralité d'encoches 18 qui définissent des dents 19. En rotation, le défilement successif des encoches 18 et des dents 19 devant le capteur 11 produit dans le capteur 11 un signal périodique de fréquence proportionnelle à la vitesse de rotation des bagues tournantes 2, 3.

La figure 4 illustre une variante du codeur pour laquelle les références des éléments semblables à ceux représentés sur les figures précédentes ont été augmentées du nombre 100. La partie cylindrique 117 du codeur comprend une pluralité de fenêtres 120 entre lesquelles sont définies des dents 119. Comme précédemment, en rotation, la succession de dents 119 et de fenêtres 120 devant le capteur produit dans le capteur un signal de fréquence proportionnelle à la vitesse de rotation des bagues tournantes du roulement.

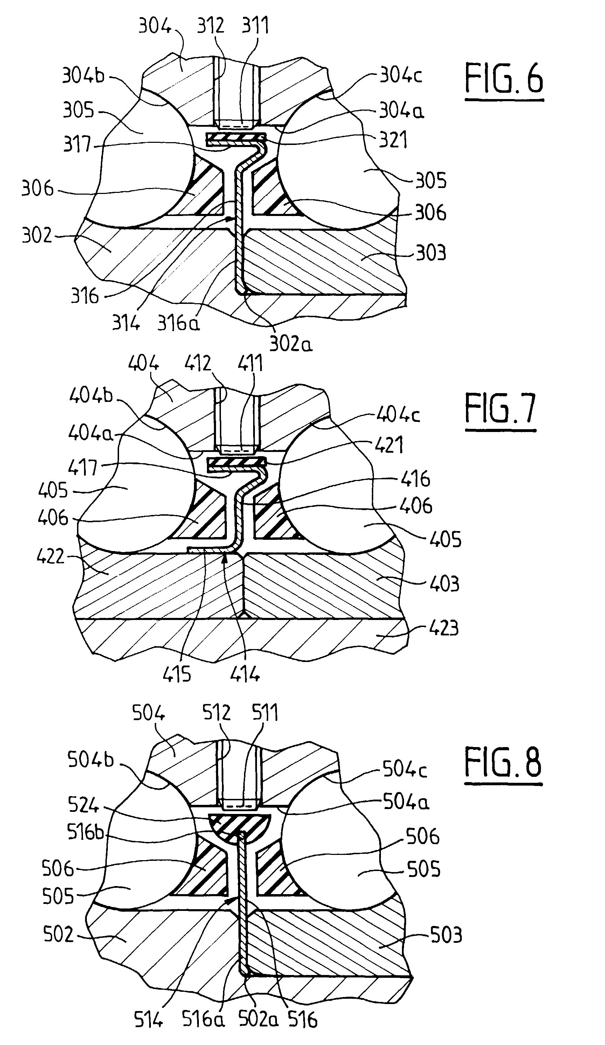

Sur la figure 5, les références des éléments semblables aux éléments des figures 1 à 3 ont été augmentées du nombre 200. Le codeur 214 comprend une partie cylindrique 215 destinée à être emmanchée sur le diamètre extérieur d'une bague intérieure d'un roulement, une partie radiale 216 s'étendant en direction de la bague extérieure et destinée à être logée entre les cages du roulement et une partie cylindrique 217 destinée à venir en regard d'un capteur. Sur le diamètre extérieur de la partie cylindrique 217, un anneau en élastomère 221 est surmoulé. L'anneau en élastomère 221 est chargé de particules magnétiques et constitue la partie active du codeur 214.

Sur la figure 6, les références des éléments semblables aux éléments des figures 1 à 3 ont été augmentées du nombre 300. Le codeur 314 comprend une partie radiale 316, une partie cylindrique 317 supportée par la partie radiale 316 et sur laquelle est surmoulé un anneau en élastomère 321 disposé en regard du capteur 311. La partie cylindrique 317 et l'anneau en élastomère 321 sont disposés dans un espace annulaire entre la surface annulaire 304a de la bague non tournante 304 séparant les chemins de roulement 304b et 304c et la surface extérieure des cages 306 de maintien des billes 305 située entre les deux rangées de billes 305. Une portion 316a de la partie radiale 316 du codeur 314 est pincée entre les bagues non tournantes 302 et 303 du roulement. Une telle disposition permet de placer les cages 306 à proximité immédiate des bagues tournantes 302 et 303, ce qui permet de réduire la dimension radiale du roulement. L'alésage de la partie radiale 316 du codeur 314 est centré sur une portée 302a de la bague 302 formant moyeu. Ainsi, le codeur 314 est fixé avec précision lors du montage du roulement et ne risque pas de se déplacer par la suite.

Sur la figure 7, les références des éléments mentionnés sur les figures 1 à 3 ont été augmentées du nombre 400. Le roulement comprend deux bagues intérieures 403 et 422 emmanchées sur la périphérie extérieure d'un arbre 423. Le codeur 414 comprend une partie cylindrique 415 emmanchée sur la bague 422, une partie radiale 416, une partie cylindrique 417 et un anneau en élastomère 421 comprenant des particules magnétiques et surmoulé sur la partie cylindrique 417. A titre de variante, le codeur 314 tel qu'illustré sur la figure 6 pourrait également être monté entre les deux bagues intérieures 403 et 422 et être centré sur l'arbre 423.

Sur la figure 8, les références des éléments mentionnés sur les figures 1 à 3 ont été augmentés du nombre 500. Le codeur 514 comprend une partie radiale 516 dont la portion de plus faible diamètre 516a est pincée entre les bagues 502 et 503 et est centrée sur la portée 502a de la bague 502. La partie active du codeur 514 est constituée par un anneau en élastomère 524 comprenant des particules magnétiques et surmoulé sur la périphérie extérieure 516b de la partie radiale 516 de l'élément codeur 514. L'anneau 524 est disposé dans un espace annulaire entre la surface annulaire 504a de la bague non tournante 504 séparant les chemins de roulement 504b et 504c des billes 505 et la surface extérieure des cages 506 située entre les deux rangées de billes 505. La dimension axiale de l'anneau 524 est supérieure à l'espace axial résiduel situé entre les deux cages 506. Ce mode de réalisation est particulièrement simple à mettre en oeuvre et permet de créer un champ magnétique satisfaisant dans un roulement de dimensions réduites.

Grâce à l'invention, et quelle que soit la variante de réalisation, le roulement muni d'un dispositif de détection de la vitesse de rotation est particulièrement compact et bien protégé contre les éléments extérieurs. La partie active du codeur est de taille suffisante pour générer dans le capteur un signal correct. De plus, la fixation du codeur sur les organes tournants du roulement est très robuste et ne risque pas de se détériorer lors de l'utilisation.

## Revendications

1. Roulement (1) à deux rangées d'éléments roulants (5) maintenus par des cages (6) comprenant une bague non tournante (4), deux bagues tournantes (2, 3) et un dispositif intégré de détection de la vitesse de rotation du type comprenant un capteur (11) fixé sur la bague non tournante (4) devant lequel défile en rotation et avec un faible entrefer un élément codeur (14) solidaire des bagues tournantes (2, 3) et capable de produire dans le capteur (11) un signal périodique de fréquence proportionnelle à la vitesse de rotation des bagues tournantes (2, 3), l'élément codeur (14) comprenant une partie radiale (16) disposée entre les cages (6) et supportant la partie active (17) de l'élément codeur (14), caractérisé en ce que ladite partie active est disposée dans un espace annulaire entre la surface annulaire (4a) de la bague non tournante (4) séparant les chemins de roulement (4b, 4c) et la surface extérieure des cages (6) située entre les deux rangées d'éléments roulants (5), la dimension axiale de ladite partie active (17) de l'élément codeur (14) étant supérieure à l'espace axial résiduel situé entre les deux cages (6).

2. Roulement selon la revendication 1, caractérisé en ce que le capteur (11) affleure sensiblement la surface annulaire (4a) de la bague non tournante (4) séparant les chemins de roulement (4b, 4c).

3. Roulement selon l'une quelconque des revendications précédentes, caractérisé en ce qu'une portion (316a) de la partie radiale (316) de l'élément codeur est pincée entre les deux bagues intérieures tournantes (302, 303).

4. Roulement selon la revendication 3, caractérisé en ce que l'alésage de la partie radiale (316) du codeur (314) est centré sur une bague intérieure (302) formant moyeu.

5. Roulement selon l'une quelconque des revendications 1 ou 2, caractérisé en ce que la partie radiale (16) du codeur (14) se prolonge par une partie cylindrique (15) emmanchée sur une bague du roulement (1).

6. Roulement selon l'une quelconque des revendications précédentes, caractérisé en ce que la partie active (524) de l'élément codeur (514) est supportée par la périphérie extérieure (516b) de la partie radiale (516) dudit élément codeur (514).

7. Roulement selon l'une quelconque des revendications 1 à 5, caractérisé en ce que l'élément codeur (214) comprend une partie cylindrique (217) disposée à proximité du capteur et supportant la partie active (221) dudit élément codeur (214).

8. Roulement selon l'une quelconque des revendications précédentes, caractérisé en ce que la partie active (17) de l'élément codeur (14) est constituée par une pluralité d'encoches (18) ou de fenêtres (120).

9. Roulement selon l'une quelconque des revendications 1 à 7, caractérisé en ce que la partie active de l'élément codeur (214) comprend un anneau en élastomère (221) chargé de particules magnétiques.

## Patentansprüche

1. Lager (1) mit zwei Reihen von Wälzkörpern (5), die mittels Käfigen (6) gehalten sind, mit einem nicht umlaufenden Ring (4), mit zwei umlaufenden Ringen (2, 3) und mit einer integrierten Vorrichtung zum Erkennen der Drehzahl in der Bauart mit einem Aufnehmer (11), der an dem nicht drehenden Ring (4) befestigt ist und vor dem mit einem geringen Luftspalt ein Codierelement (14) sich drehend vorbeiläuft, das an den umlaufenden Ringen (2, 3) fest sitzt und das in der Lage ist, in dem Aufnehmer (11) ein periodisches Signal zu erzeugen, dessen Frequenz proportional zu der Drehzahl der umlaufenden Ringe (2, 3) ist, wobei das Codierelement (14) einen radial verlaufenden Abschnitt (16) aufweist, der zwischen den Käfigen (6) angeordnet ist und der den aktiven Bereich (17) des Codierelementes (14) trägt, dadurch gekennzeichnet, dass in einem Ringraum zwischen der Ringfläche (4a) des stillstehenden Ringes (4), der die Laufbahnen (4b, 4c) voneinander trennt, sowie der Außenfläche des zwischen den beiden Reihen von Wälzelementen (5) angeordneten Käfigs (6) der aktive Bereich angeordnet ist, und dass die axialen Abmessungen des aktiven Bereiches (17) des Codierelementes (14) größer als der verbleibende axiale Abstand ist, der sich zwischen den beiden Käfigen (6) vorhanden ist.

2. Lager nach Anspruch 1, dadurch gekennzeichnet, dass der Aufnehmer (11) die Ringfläche (4a) des stillstehenden Rings (4), der die Laufbahnen (4b, 4c) voneinander trennt, im Wesentlichen berührt.

3. Lager nach einem der vorhergehenden Ansprüche, dadurch gekennzeichnet, dass ein Teil (316a) des radialen Abschnitts (316) des Codierelementes zwischen den beiden inneren umlaufenden Ringen (302, 303) eingeklemmt ist.

4. Lager nach Anspruch 3, dadurch gekennzeichnet, dass die Bohrung des radialen Abschnittes (316) des Codierelementes (314) auf einem Innenring (302) zentriert ist, der eine Nabe bildet.

5. Lager nach einem der Ansprüche 1 oder 2, dadurch gekennzeichnet, dass der radiale Abschnitt (16) des Codierelementes (14) sich in einem zylindrischen Abschnitt (15) fortsetzt, der mit Press-Sitz auf einem Lagerring aufgepresst ist.

6. Lager nach einem der vorhergehenden Patentansprüche, dadurch gekennzeichnet, dass der aktive Bereich (524) des Codierelements (514) auf der Außenumfangsfläche (516b) des radialen Abschnittes (516) des Codierelementes (514) gehaltert ist.

7. Lager nach einem der Ansprüche 1 bis 5, dadurch gekennzeichnet, dass das Codierelement (214) einen zylindrischen Abschnitt (217) aufweist, der in der Nähe des Aufnehmers angeordnet ist und den aktiven Bereich (221) des Codierelementes (214) trägt.

8. Lager nach einem der vorhergehenden Ansprüche, dadurch gekennzeichnet, dass der aktive Bereich (17) des Codierelementes (14) durch eine Vielzahl von Ausschnitten (18) oder Fenstern (120) gebildet ist.

9. Lager nach einem der Ansprüche 1 bis 7, dadurch gekennzeichnet, dass der aktive Bereich des Codierelementes (214) einen elastomeren Ring (221) aufweist, der mit magnetischen Partikeln gefüllt ist.

## Claims

1. Rolling-contact bearing (1) with two rows of rolling elements (5) held by cages (6) comprising a non-rotating race (4), two rotating races (2, 3)and a built-in device for detecting the speed of rotation of the type comprising a sensor (11) fixed to the non-rotating race (4) and past which there files in rotation, and with a slight air gap , an encoder element (14) integral with the rotating races (2, 3) and capable of producing in the sensor (11) a periodic signal of frequency proportional to the speed of rotation of the rotating races (2, 3), the encoder element (14) comprising a radial part (16) arranged between the cages (6) and supporting the active part (17) of the encoder element (14), characterized in that the said active part is arranged in an annular space between the annular surface (4a)of the non-rotating race (4) separating the raceways (4b, 4c) and the outer surface of the cages (6) which is situated between the two rows of rolling elements (5), the axial dimension of the said active part (17) of the encoder element (14) being greater than the remaining axial space lying between the two cages.

2. Rolling-contact bearing according to Claim 1, characterized in that the sensor (11) is substantially flush with the annular surface (4a) of the non-rotating race (4) separating the raceways (4b, 4c).

3. Rolling-contact bearing according to either one of the preceding claims, characterized in that a portion (316a) of the radial part (316) of the encoder element is gripped between the two rotating inner races (302, 303).

4. Rolling-contact bearing according to Claim 3, characterized in that the bore of the radial part (316) of the encoder (314) is centred on an inner race (302) forming a hub.

5. Rolling-contact bearing according to either one of Claims 1 and 2, characterized in that the radial part (16) of the encoder (14) is extended by a cylindrical part (15) fitted on to one race of the bearing (1).

6. Rolling-contact bearing according to any one of the preceding claims, characterized in that the active part (524) of the encoder element (514) is supported by the outer periphery (516b) of the radial part (516) of the said encoder element (514).

7. Rolling-contact bearing according to any one Claims 1 to 5, characterized in that the encoder element (214) comprises a cylindrical part (217) arranged close to the sensor and supporting the active part (221) of the said encoder element (214).

8. Rolling-contact bearing according to any one of the preceding claims, characterized in that the active part (17) of the encoder element (14) consists of a plurality of notches (18) or of openings (120).

9. Rolling-contact bearing according to any one of Claims 1 to 7, characterized in that the active part of the encoder element (214) comprises a ring (221) made of elastomer filled with magnetic particles.
